# EUROPÄISCHE PATENTSCHRIFT

(11) **EP 4 003 713 B1**
(45) Veröffentlichungstag und Bekanntmachung des Hinweises auf die Patenterteilung: **24.12.2025**
(21) Anmeldenummer: 20742222.1
(22) Anmeldetag: 15.07.2020
(51) Int. Cl.: B29C 70/44, B29C 70/54, B29C 33/30, B29C 33/40, B29C 70/48, B29C 45/00

(54) **VERFAHREN UND WERKZEUGSYSTEM ZUM HERSTELLEN EINES BAUTEILS AUS EINEM FASERVERSTÄRKTEN KUNSTSTOFF**
METHOD AND TOOL SYSTEM FOR MANUFACTURING A COMPONENT FROM A FIBRE-REINFORCED PLASTIC
PROCÉDÉ ET SYSTÈME D'OUTIL POUR LA FABRICATION D'UN COMPOSANT À PARTIR D'UNE MATIÈRE PLASTIQUE RENFORCÉE PAR DES FIBRES

(30) Priorität: 30.07.2019 DE 102019120568
(43) Veröffentlichungstag der Anmeldung: 01.06.2022
(73) Patentinhaber: Airbus Operations GmbH, 21129 Hamburg (DE)
(72) Erfinder: SEEGEL, Hauke, 21129 Hamburg (DE)
(74) Vertreter: LKGLOBAL Lorenz & Kopf Patentanwalt Attorney at Law PartG mbB
(86) Internationale Anmeldenummer: PCT/EP2020/069937
(87) Internationale Veröffentlichungsnummer: WO 2021/018577

(56) Entgegenhaltungen:
- EP-A1- 0 780 213
- EP-A1- 2 324 995
- EP-B1- 2 324 995
- DE-A1- 102015 007 284
- TIMOTHY R MCCAFFERY ET AL: "Low Cost Mold Development for Prototype Parts Produced by Vacuum Assisted Resin Transfer Molding (VARTM)", JOURNAL OF COMPOSITE MATERIALS, 31 October 2003 (2003-10-31), XP055730269, Retrieved from the Internet <URL:https://citeseerx.ist.psu.edu/viewdoc/download?doi=10.1.1.914.1253&rep=rep1&type=pdf> [retrieved on 20200914], DOI: 10.1177/002199803032832

## Beschreibung

### TECHNISCHES GEBIET

Die Erfindung betrifft ein Verfahren zum Herstellen eines Bauteils aus einem faserverstärkten Kunststoff, sowie ein Werkzeugsystem zum Herstellen eines derartigen Bauteils.

### HINTERGRUND DER ERFINDUNG

Für der Herstellung von großformatigen Bauteilen aus einem Faserverbundwerkstoff sind unterschiedliche Verfahren bekannt. Überwiegend werden Spritzpressverfahren oder Vakuuminfusionsverfahren eingesetzt. Grundsätzlich werden bei beiden Verfahren Formwerkzeuge verwendet, welche die herzustellende Form des Bauteils vorgeben und mit einer oder mehreren Lagen aus einem Faserhalbzeug versehen werden. Nach Verschließen der Form werden die Lagen in der Form mit Harz getränkt und anschließend ausgehärtet. Je nach verwendetem Verfahren wird Über- oder Unterdruck eingesetzt.

Gerade bei der Herstellung größerer Bauteile sind großformatige Formwerkzeuge erforderlich. Bei gängigen Harzsystemen ist indes je nach Anwendungsfall eine bestimmte Temperatur zur ausreichenden Durchtränkung des Faserhalbzeugs mit Harz und der anschließenden Vernetzung des Harzes zur Erreichung geforderten Eigenschaften des resultierenden Bauteils gewünscht. Aufgrund eines bestimmten thermischen Ausdehnungskoeffizienten ist es bei gängigen Materialien für die Formwerkzeuge unumgänglich, dass sich das Formwerkzeug bei der Erwärmung ausdehnt. Da das Formwerkzeug die spätere Form des hergestellten Bauteils vorgibt und das thermische Ausdehnungsverhalten von dem des Werkzeugmaterials abweichen kann, kann es aufgrund der Wärmedehnung folglich zu Abweichungen kommen. Um diese sowie daraus resultierende Beschädigungen beim Entformen zu vermeiden, werden die Bauteile oftmals in einem Übermaß hergestellt, um dann spanabhebend auf das gewünschte Maß gebracht zu werden. Alternativ dazu könnten kostenintensive und/oder schwer bearbeitbare Werkzeugmaterialien verwendet werden, welche ein deutlich geringeres thermisches Ausdehnungsverhalten aufweisen. Weiter alternativ könnten aufwändige, mehrteilige Formwerkzeuge eingesetzt werden, die mit teilweise aufwändigen Bewegungs- bzw. Entformungsmechanismen ausgestattet sind. Gerade bei der Herstellung von Bauteilen aus einem kohlefaserverstärkten Kunststoff erhöht dies sowohl den Aufwand als auch die Kosten. EP0780213A1 offenbart den Oberbegriff des Anspruchs 1.

### ZUSAMMENFASSUNG DER ERFINDUNG

Es ist daher eine Aufgabe der Erfindung, ein Verfahren vorzuschlagen, das eine möglichst präzise Herstellung eines Bauteils mit einem vorgesehenen Maß erlaubt, ohne dass aufwändige Nacharbeiten erforderlich sind.

Die Aufgabe wird gelöst durch ein Verfahren mit den Merkmalen des unabhängigen Anspruchs 1 und ein Werkzeugsystem mit den Merkmalen des unabhängigen Anspruchs 6.

Vorteilhafte Ausführungsformen und Weiterbildungen sind den Unteransprüchen und der nachfolgenden Beschreibung zu entnehmen.

Es wird ein Verfahren zum Herstellen eines Bauteils aus einem faserverstärkten Kunststoff vorgeschlagen, aufweisend die Schritte des Bereitstellens eines Formwerkzeugs mit einer einen umlaufenden Rand aufweisenden Werkzeugoberfläche, des Positionierens mindestens einer Lage eines Faserhalbzeugs mit einer umlaufenden Kontur, die innerhalb des umlaufenden Randes liegt, auf der Werkzeugoberfläche bei einer ersten Temperatur, des Anordnens eines Ausgleichskörpers mit einem thermischen Ausdehnungskoeffizienten, der größer als ein thermischer Ausdehnungskoeffizient des Formwerkzeugs ist, entlang des umlaufenden Randes, so dass sich der Ausgleichskörper von dem Rand aus in Richtung der umlaufenden Kontur erstreckt, des Abdichtens der Anordnung der mindestens einen Lage und des Ausgleichskörpers mittels einer Verschlusseinrichtung zum Ausbilden einer geschlossenen Form, des Erwärmens der Form, so dass sich der Ausgleichskörper stärker ausdehnt als die Form, des Einleitens von Harz in die Form und des Aushärtens, Abkühlens und Entnehmens des Bauteils.

Das Verfahren kann insbesondere als Harz-Spritzpressverfahren (Resin Transfer Molding, RTM) realisiert werden. Hierzu wird die mindestens eine Lage des Faserhalbzeugs bereitgestellt, welche mit Hilfe der Verschlusseinrichtung auf dem Formwerkzeug rundum abgedichtet wird. Während flexible Folien denkbar wären, bietet sich bei diesem Verfahren insbesondere die Verwendung eines weiteren, harten Formwerkzeugabschnitts an, das über das Faserhalbzeug gebracht wird. Ein Ziel ist, damit die mindestens eine Lage luftdicht und formsicher auf dem Formwerkzeug zu kapseln.

Bei Ausführung des RTM-Verfahrens kann sich eine druckbeaufschlagte Zufuhr von Harz anschließen, um die mindestens eine Lage des Faserhalbzeugs zu infiltrieren. Alternativ dazu wäre auch eine Evakuierung der Form möglich, durch die Harz aufgrund des Unterdrucks in die Form gezogen wird.

Die mindestens eine Lage des Faserhalbzeugs befindet sich auf dem Formwerkzeug und weist eine umlaufende Kontur auf, die von dem herzustellenden Bauteil aus gesehen eine Lücke zu dem umlaufenden Rand der Werkzeugoberfläche einschließt.

Diese dient der Aufnahme des Ausgleichskörpers, der erfindungsgemäß die Eigenschaft aufweist, einen thermischen Ausdehnungskoeffizienten zu besitzen, der größer als ein thermischer Ausdehnungskoeffizient des Formwerkzeugs ist. Der Ausdehnungskoeffizient ist als Längenausdehnungskoeffizient zu verstehen. Dies bedeutet, dass sich bei Erwärmung der Form mit darin enthaltener mindestens einer Lage des Faserhalbzeugs sowohl das Formwerkzeug ausdehnt, als auch der Ausgleichskörper. Der Ausgleichskörper dehnt sich dabei stärker aus als das Formwerkzeug, um einen nach Ablegen des Ausgleichskörpers zu der umlaufenden Kontur noch eingeschlossenen Spalt zu schließen. Der Ausgleichskörper ist bevorzugt so abzumessen, dass er bei erhöhter Temperatur bündig auf das Faserhalbzeug aufschließt und dieses vollständig konturseitig abdichtet. Besonders bevorzugt ist der Ausgleichskörper so abzumessen, dass er eine den Toleranzen entsprechende Harzkante bildet.

Der umlaufende Rand der Werkzeugoberfläche und die umlaufende Kontur der mindestens einen Lage des Faserhalbzeugs können dabei derart gewählt werden, dass bei einer gezielten Erhöhung der Temperatur zum Verbessern der Fließfähigkeit des Harzes ein ausreichender Spalt zwischen der Kontur und dem Rand verbleibt, durch den sich das Harz in der geschlossenen Form von einer oder mehreren Harzeinleitungsstellen in das Faserhalbzeug hineinbewegen kann.

In einem Fall könnte das Formwerkzeug aus einer Aluminiumlegierung bestehen. Diese weist einen Längenausdehnungskoeffizienten im Bereich von ungefähr 22 bis 24·10⁻⁶ K⁻¹ auf. Der Ausgleichskörper besteht aus einem Kunststoff, etwa PTFE oder ähnlichem.

PTFE könnte einen Längenausdehnungskoeffizienten von 100 bis 160·10⁻⁶ K⁻¹ aufweisen, also einen etwa 5 bis 7fachen Wert. Damit kann eine zuverlässige Ausdehnung des Ausgleichskörpers im Innern der geschlossenen Form zum Schließen eines Zwischenraums zwischen umlaufendem Rand und umlaufender Kontur bei sich ausdehnender Form realisiert werden.

Der Begriff "Harz" soll im Sinne der Erfindung ein beliebiges Matrixmaterial bezeichnen, welches dazu geeignet ist, mit einem Fasermaterial ein Faserverbundbauteil zu bilden. Das Matrixmaterial kann dabei auch bereits einen Härter enthalten (Mehrkomponentenharzsystem). Harz kann sich im engeren Sinne auf duroplastische Kunststoffe, etwa Epoxidharzsysteme, beziehen. Nicht ausgeschlossen sein sollen jedoch auch thermoplastische Kunststoffe.

Der Ausgleichskörper ist weiterhin als ein Bauteil zu verstehen, welches primär für den Ausgleich der thermischen Ausdehnung des Formwerkzeugs dient. Es befindet sich bündig in dem Zwischenraum zwischen dem umlaufenden Rand und der umlaufenden Kontur zumindest bei den Temperaturen, bei denen sich das Harz vernetzt. Optional kann der Ausgleichskörper auch zusätzlich zum Abdichten des Formwerkzeugs eingesetzt werden. Es ist jedoch denkbar, dass eine zusätzliche umlaufende Dichtung außen an den Rand des Formwerkzeugs angeordnet wird. Der Ausgleichskörper kann bandartig geformt sein und besitzt dadurch eine Länge, die die Breite deutlich übersteigt. Der Ausgleichskörper könnte dann manuell oder automatisiert auf gewünschte Weise platziert werden. Als Alternative bietet es sich an, den Ausgleichskörper als eine oder mehrere Platten auszuführen, die die gewünschte Form des Ausgleichskörpers bereitstellt bzw. bereitstellen.

In einer besonders vorteilhaften Ausführungsform umfasst das Erwärmen der Form das Erwärmen von der ersten Temperatur auf eine zweite Temperatur, die in einem Bereich von 70°C bis 150°C liegt. Sie kann weiterhin auch in einem Bereich liegen, dessen untere Grenze höher ist, beispielsweise 90°C. Des Weiteren könnte die obere Grenze geringfügig höher oder niedriger sein. Durch die Erwärmung auf die zweite Temperatur in dem genannten Temperaturbereich kann die Fließfähigkeit des Harzes verbessert werden. Zusätzlich kann bei der zweiten Temperatur eine erste Vernetzung des Harzes stattfinden. Das Erwärmen der Form auf eine derartige Temperatur wird bei RTM-Verfahren zum Herstellen von CFK-Bauteilen oft durchgeführt. Bei der Erwärmung auf die zweite Temperatur findet eine erste Längenausdehnung des Formwerkzeug statt. Die Längenausdehnung des Ausgleichskörpers übertrifft diese jedoch deutlich. Durch die stärkere Ausdehnung des Ausgleichskörpers wird ein Zwischenraum zwischen dem Rand und der umlaufenden Kontur des Faserhalbzeugs zumindest teilweise geschlossen. Harz wird dabei aus diesem Zwischenraum verdrängt.

Es ist vorteilhaft, wenn das Verfahren ferner das Erwärmen auf eine dritte Temperatur zum Aushärten aufweist, die in einem Bereich von 150°C bis 200°C liegt. Eine Erwärmung auf die dritte Temperatur, welche beispielsweise bei ungefähr 180 °C liegen könnte, führt zu einer vollständigen Aushärtung des Harzes, so dass das Bauteil seine Endfestigkeit erhält.

Es wird darauf hingewiesen, dass das Zusammenspiel des sich ausdehnenden Ausgleichskörpers und des Formwerkzeugs genau aufeinander abgestimmt sein sollte. Das Formwerkzeug dehnt sich beim Erwärmen von der ersten Temperatur zu der dritten Temperatur hin kontinuierlich aus. Es kann während der Erwärmungsphase eine Grenztemperatur geben, bei der das Formwerkzeug exakt mit der vorgegebenen Form übereinstimmt. Gleichzeitig erhöht das Faserhalbzeug in Kombination mit dem darin enthaltenen Harz zumindest ab einer bestimmten Temperatur kontinuierlich seine Festigkeit, bis die Endfestigkeit erreicht wird. Demgemäß könnte der Ausgleichskörper etwa so dimensioniert sein, dass bei einer bestimmten Grenztemperatur exakt der Zwischenraum zwischen dem umlaufenden Rand und der umlaufenden Kontur durch Ausdehnung des Ausgleichskörpers geschlossen ist und das teilvernetzte, in dem Faserhalbzeug enthaltene Harz eine solche Formstabilität hervorruft, dass bei weiterer Erwärmung des Formwerkzeugs und der dadurch bedingten weiteren Ausdehnung das Faserhalbzeug nicht weiter verformt wird. Eine solche Grenztemperatur könnte zwischen der zweiten und der dritten Temperatur liegen. Eine Haltestufe auf dieser Grenztemperatur ermöglicht die Vernetzung bis hin zur Konturtreue bevor eine stärkere Erwärmung erfolgt, um die Endfestigkeit zu erhöhen. Es ist folglich sinnvoll, experimentell oder durch Simulation die erforderlichen Abmessungen des Ausgleichskörpers in Abhängigkeit des Materials zu prüfen und abzustimmen.

Der Ausgleichskörper könnte bevorzugt vor dem Anordnen auf dem Formwerkzeug an Längskanten schmaler dimensioniert werden als an Querkanten des Formwerkzeugs. Die Ausdehnung des Formwerkzeug ist abhängig von dessen Erstreckung. Ist das Formwerkzeug beispielsweise deutlich länger als breit, ist in Längenrichtung eine deutlich größere Längenausdehnung zu erwarten, als in Querrichtung. Es bietet sich folglich an, an den Längskanten schmalere Ausgleichskörper einzusetzen, als an den Querkanten. Es ist vorstellbar, dass die Breite des Ausgleichskörpers an die jeweilige Erstreckung des Formwerkzeug angepasst ist. Der Ausgleichskörper wird folglich passend zu geometrischen Anforderungen des Bauteils geformt. Variiert etwa die Breite des Bauteils, könnte auch die Breite des Ausgleichskörpers jeweils lokal angepasst werden.

Des Weiteren ist es vorteilhaft, wenn der Ausgleichskörper derart dimensioniert wird, dass bei der ersten Temperatur ein Spalt zwischen dem Ausgleichskörper und der mindestens einen Lage des Faserhalbzeugs vorliegt und erst nach dem Erwärmen und vor dem Einleiten von Harz der Ausgleichskörper zu der mindestens einen Lage des Faserhalbzeugs aufschließt. Das Aufschließen ist dahingehend zu verstehen, dass sich der Ausgleichskörper bündig an die umlaufende Kontur des Faserhalbzeugs anlegt. Dadurch kann ein Austreten von Harz über die umlaufende Kontur des Faserhalbzeugs verhindert werden. Es kann vorgesehen sein, stellenweise Lücken in dem Ausgleichskörper zu lassen, die sich beispielsweise erst bei einer Erwärmung über die zweite Temperatur schließen, um dort eine geeignete Stelle zum Einleiten von Harz offen zu lassen.

Das Formwerkzeug weist einen thermischen Ausdehnungskoeffizienten von höchstens 30·10⁻⁶ K⁻¹ und der Ausgleichskörper einen thermischen Ausdehnungskoeffizienten von mindestens 100·10⁻⁶ K⁻¹ auf. Damit wird ein signifikanter Unterschied zwischen den beiden Ausdehnungskoeffizienten hergestellt. Der Quotient aus dem thermischen Ausdehnungskoeffizienten des Ausgleichskörpers und des Formwerkzeug kann deutlich größer als 3 sein.

Die Erfindung betrifft ferner ein Werkzeugsystem zum Herstellen eines Bauteils aus einem faserverstärkten Kunststoff, aufweisend ein Formwerkzeug mit einer einen umlaufenden Rand aufweisenden Werkzeugoberfläche, einen Ausgleichskörper mit einem thermischen Ausdehnungskoeffizienten, der größer ist als ein thermischer Ausdehnungskoeffizient des Formwerkzeugs, eine Verschlusseinrichtung, die mit dem Formwerkzeug korrespondierend geformt ist, und eine Erwärmungseinrichtung zur bedarfsweisen Erwärmung des Formwerkzeugs, wobei die Werkzeugoberfläche dazu ausgebildet ist, bei einer ersten Temperatur mindestens eine Lage eines Faserhalbzeugs mit einer umlaufenden Kontur aufzunehmen, die innerhalb des umlaufenden Randes liegt, sowie des Ausgleichskörpers entlang des umlaufenden Randes, so dass sich der Ausgleichskörper von dem Rand aus in Richtung der umlaufenden Kontur erstreckt, wobei die Verschlusseinrichtung dazu ausgebildet ist, das Formwerkzeug zu einer geschlossenen Form zu verschließen und dabei die mindestens eine Lage des Faserhalbzeugs und den Ausgleichskörper einzuschließen, und wobei die geschlossene Form mindestens eine Harzleitung zum Aufnehmen von Harz aufweist.

Der Ausgleichskörper kann elastisch sein. Dies kann sich anbieten, wenn der Ausgleichskörper durch ein manuelles oder automatisiertes Verfahren sukzessive entlang seiner gewünschten Erstreckung auf dem Formwerkzeug platziert wird. Der Ausgleichskörper könnte dann entsprechend aufrollbar sein. Dabei ist allerdings zu bemerken, dass sich ein solches Platzieren besonders bevorzugt bei Formwerkzeugen anbietet, bei denen keine starken Breitenänderungen erfolgen.

Es könnte sich anbieten, dass der Ausgleichskörper bandartig geformt ist. Dies könnte das Platzieren des Ausgleichskörpers auf dem Formwerkzeug vereinfachen.

Das Formwerkzeug weist dabei einen thermischen Ausdehnungskoeffizienten von höchstens 30·10⁻⁶ K⁻¹ und der Ausgleichskörper einen thermischen Ausdehnungskoeffizienten von mindestens 100·10⁻⁶ K⁻¹ auf.

Es ist hinsichtlich Material- und Fertigungskosten sinnvoll, wenn das Formwerkzeug Aluminium aufweist. Formwerkzeuge aus Aluminium bieten sich insbesondere für die Herstellung größerer Bauteile an, da die Werkzeugoberfläche leicht bearbeitbar ist und im Vergleich zu metallischen Materialien mit einer ähnlichen Temperaturbeständigkeit und einem deutlich geringeren Ausdehnungskoeffizienten deutlich kostenintensiver sind.

Es ist weiterhin denkbar, dass das Formwerkzeug eine eisenhaltige Legierung aufweist. Diese kann beispielsweise als Stahl, beispielsweise Gussstahl, ausgeführt sein. Es ist außerdem denkbar, Eisen-Nickel-Legierungen einzusetzen, welche auch unter dem Namen INVAR bekannt sind und einen besonders geringen thermischen Ausdehnungskoeffizienten aufweisen können.

Das Werkzeug kann weiterhin auch CFK aufweisen.

Es ist weiterhin bevorzugt, wenn der Ausgleichskörper PTFE aufweist.

Damit kann ein sehr hoher thermischer Ausdehnungskoeffizient erreicht werden.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische, blockbasierte Darstellung eines Verfahrens.
Fig. 2a bis 2c zeigen ein Werkzeugsystem in mehreren räumlichen Ansichten.
Fig. 3a bis 3d zeigen Details von Ausgleichskörpern in dem Formwerkzeug.

### DETAILLIERTE DARSTELLUNG EXEMPLARISCHER AUSFÜHRUNGSFORMEN

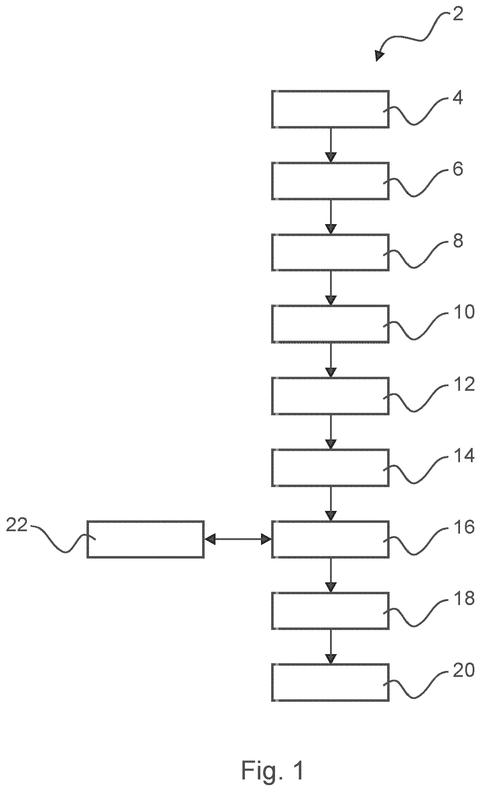

Fig. 1 zeigt eine schematische blockbasierte Darstellung eines erfindungsgemäßen Verfahrens 2 zum Herstellen eines Bauteils aus einem faserverstärkten Kunststoff. Das Verfahren 2 weist die Schritte des Bereitstellens 4 eines Formwerkzeugs mit einer einen umlaufenden Rand aufweisenden Werkzeugoberfläche, des Positionierens 6 mindestens einer Lage eines Faserwerkzeugs mit einer umlaufenden Kontur, die innerhalb des umlaufenden Randes liegt, auf der Werkzeugoberfläche bei einer ersten Temperatur, des Anordnens 8 eines Ausgleichskörpers mit einem thermischen Ausdehnungskoeffizienten, der größer als ein thermischer Ausdehnungskoeffizient des Formwerkzeugs ist, entlang des umlaufenden Randes, so dass sich der Ausgleichskörper von dem Rand aus in Richtung der umlaufenden Kontur erstreckt. Anschließend erfolgt das Abdichten 10 der Anordnung der mindestens einen Lage und des Ausgleichskörpers mittels einer Verschlusseinrichtung zum Ausbilden einer geschlossenen Form, des Erwärmens 12 der Form, so dass sich der Ausgleichskörper stärker ausdehnt als die Form, des Einleitens 14 von Harz in die Form, des Aushärtens 16, des Abkühlens 18 und des Entnehmens 20. Das Erwärmen kann ein Erwärmen auf eine zweite Temperatur umfassen, welche in einem Bereich von 90°C bis 150°C liegen kann. Nach dem Einleiten 16 kann zum Aushärten 18 ein Erwärmen 22 auf eine dritte Temperatur in einem Bereich von 150°C bis 200 °C vorgesehen sein.

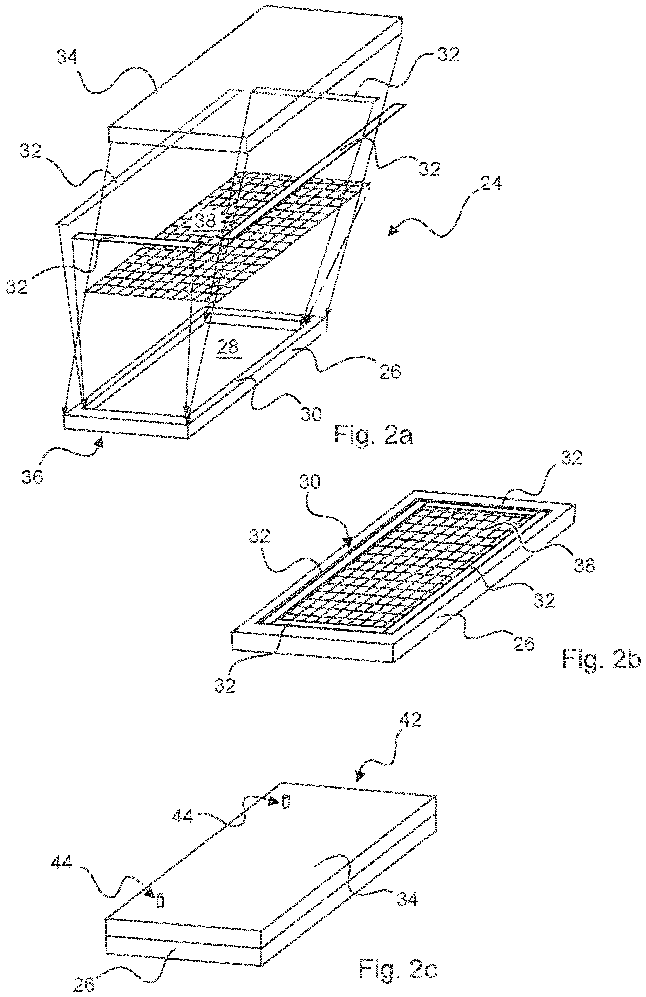

Fig. 2a zeigt in einer sehr schematischen Darstellung ein erfindungsgemäßes Werkzeugsystem 24, das das vorangehend dargestellte Verfahren 2 ermöglicht. Das Werkzeugsystem 24 weist ein Formwerkzeug 26 mit einer Werkzeugoberfläche 28 auf, die einen umlaufenden Rand 30 besitzt. Ferner sind mehrere, beispielhaft bandartig geformte Ausgleichskörper 32 vorgesehen. Während das Formwerkzeug 26 beispielsweise aus einem Aluminium hergestellt werden könnte, weisen die Ausgleichskörper 32 bevorzugt ein Kunststoffmaterial, wie beispielsweise PTFE, auf. Das Material der Ausgleichskörper 32 könnte starr oder elastisch sein. Die Verwendung eines elastischen Materials könnte ein automatisiertes Auftragen erleichtern, falls ein solches gewünscht ist. Der thermische Ausdehnungskoeffizient des Ausgleichskörpers 32 liegt erfindungsgemäß deutlich über dem des Formwerkzeugs 26.

Ferner ist eine Verschlusseinrichtung 34 vorgesehen, die komplementär zu dem Formwerkzeug 26 ausgebildet ist. Die Verschlusseinrichtung 34 kann durch eine Verschraubung oder eine externe Bewegungs- oder Halteeinrichtung auf das Formwerkzeug 26 gepresst werden. Eine Erwärmungseinrichtung 36 ist lediglich als Bezugszeichen unter dem Formwerkzeug 26 dargestellt. Die Erwärmungseinrichtung 36 könnte sowohl in dem Formwerkzeug 26, als auch in der Verschlusseinrichtung 34, in beiden dieser Elemente oder extern dazu vorgesehen sein und dient der bedarfsweisen Erwärmung des Formwerkzeugs 26.

Die Werkzeugoberfläche 28 ist dazu ausgebildet, bei einer ersten Temperatur, welche beispielsweise die Raumtemperatur (ungefähr 20 °C) ist, eine Lage eines Faserhalbzeugs 38 aufzunehmen. Dieses weist eine umlaufende Kontur 40 auf. Liegt das Faserhalbzeug 38 auf der Werkzeugoberfläche 28, liegt die umlaufende Kontur 40 innerhalb des umlaufenden Randes 30, so dass folglich ein Spalt vorliegt. Die Ausgleichskörper 32 liegen dann auf dem Formwerkzeug auf der Werkzeugoberfläche 28 auf und schließen sich bevorzugt bündig an den Rand 30 an.

Die Verschlusseinrichtung 34 ist ferner dazu ausgebildet, das Formwerkzeug 26 zu einer geschlossenen Form 42 zu verschließen (siehe Fig. 2c), dabei sowohl das Faserhalbzeug 38, als auch die Ausgleichskörper 32 einzuschließen und die Prozesskräfte aufzunehmen. Letztere resultieren aus einem Harzdruck und einem thermischen Expansionsdruck. Hiernach kann Harz über bestimmte Harzeinlässe 44 in die Form 42 eingebracht werden, so dass das Faserhalbzeug 38 infiltriert wird.

Wie vorangehend dargestellt, liegt ein besonderer Augenmerk auf dem thermischen Ausdehnungskoeffizienten des Formwerkzeugs 26 sowie der Ausgleichskörper 32. Dies wird anhand der weiteren Illustrationen besonders deutlich.

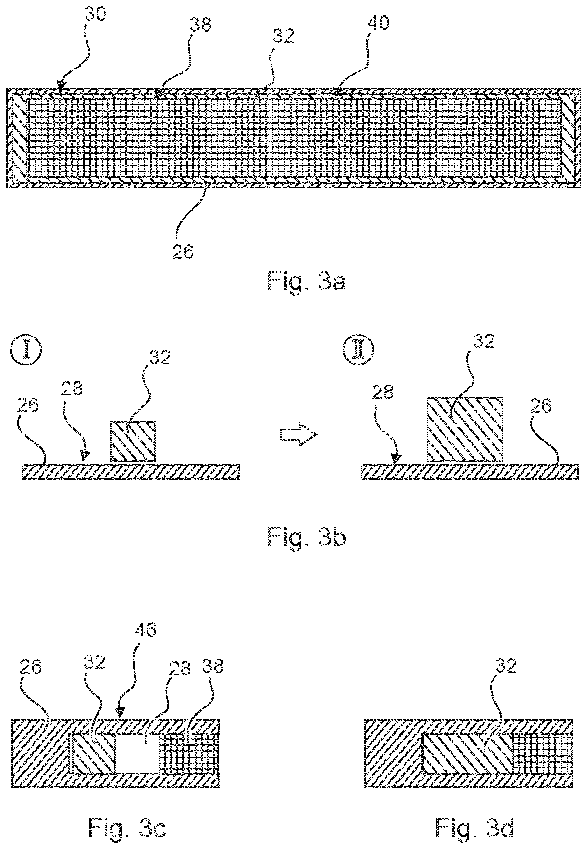

Fig. 3a zeigt etwa das Formwerkzeug 26 mit darauf befindlichem Faserhalbzeug 38 sowie einem Ausgleichskörper 32, der an dem umlaufenden Rand 30 angeordnet ist und sich in Richtung der umlaufenden Kontur 40 des Faserhalbzeugs 38 erstreckt. Es könnte sich hierbei beispielsweise um eine Flügelschale handeln, die eine längliche Form aufweist.

In Fig. 3b wird in einer Teilansicht I das Formwerkzeug 26 bei der ersten Temperatur gezeigt, bei der das Faserhalbzeig 38 auf die Werkzeugoberfläche 28 gelegt wird. Der Ausgleichskörper 32 befindet sich hier in einem Zustand geringer Expansion. In der Teildarstellung II wurde das Formwerkzeug 26 auf die zweite oder dritte Temperatur gebracht, wobei der Ausgleichskörper 32 bereits signifikant ausgedehnt ist.

Fig. 3c zeigt einen Ausschnitt aus dem Formwerkzeug 26, dem Ausgleichskörper 32, dem Faserhalbzeug 38 und der Werkzeugoberfläche 28. Diese ist bei der ersten Temperatur in Form eines Spalts 46 sichtbar. Der Spalt 46 wird auch nach dem Abkühlen auftreten und dabei das Entformen des fertigen Bauteils von dem Formwerkzeug 26 erleichtern. Zumindest während der dritten Temperatur, allerdings optional auch während der zweiten Temperatur, könnte der Ausgleichskörper 32 so stark ausgedehnt sein, dass der Spalt 46 abgeschlossen ist und damit eine Formtreue des Faserhalbzeug 38 erleichtert wird.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Verfahren
- 4: Bereitstellen
- 6: Positionieren
- 8: Anordnen
- 10: Abdichten
- 12: Erwärmen (auf eine zweite Temperatur)
- 14: Einleiten
- 16: Aushärten
- 18: Abkühlen
- 20: Entnehmen
- 22: Erwärmen (auf eine dritte Temperatur)
- 24: Werkzeugsystem
- 26: Formwerkzeug
- 28: Werkzeugoberfläche
- 30: umlaufender Rand
- 32: Ausgleichskörper
- 34: Verschlusseinrichtung
- 36: Erwärmungseinrichtung
- 38: Faserhalbzeug
- 40: umlaufende Kontur
- 42: Form
- 44: Harzeinlass
- 46: Spalt

## Patentansprüche

1. Verfahren (2) zum Herstellen eines Bauteils aus einem faserverstärkten Kunststoff, aufweisend die Schritte:
- Bereitstellen (4) eines Formwerkzeugs (26) mit einer einen umlaufenden Rand (30) aufweisenden Werkzeugoberfläche (28),
- Positionieren (6) mindestens einer Lage eines Faserhalbzeugs (38) mit einer umlaufenden Kontur (40), die innerhalb des umlaufenden Randes (30) liegt, auf der Werkzeugoberfläche (28) bei einer ersten Temperatur,
- Anordnen (8) eines Ausgleichskörpers (32) mit einem thermischen Ausdehnungskoeffizienten, der größer als ein thermischer Ausdehnungskoeffizient des Formwerkzeugs (26) ist, entlang des umlaufenden Randes (30), so dass sich der Ausgleichskörper (32) von dem Rand (30) aus in Richtung der umlaufenden Kontur (40) erstreckt,
- Abdichten (10) der Anordnung der mindestens einen Lage und des Ausgleichskörpers (32) mittels einer Verschlusseinrichtung (34) zum Ausbilden einer geschlossenen Form (42),
- Erwärmen (12) der Form (42), so dass sich der Ausgleichskörper (32) stärker ausdehnt als die Form (42),
- Einleiten (14) von Harz in die Form (42) und
- Aushärten (16), Abkühlen (18) und Entnehmen (20) des Bauteils,
wobei das Formwerkzeug (26) einen thermischen Ausdehnungskoeffizienten von höchstens 30·10⁻⁶ K⁻¹ aufweist, der Ausgleichskörper (32) aus einem Kunststoff hergestellt ist und der Ausgleichskörper (32) **dadurch gekennzeichnet ist, dass** er einen thermischen Ausdehnungskoeffizienten von mindestens 100·10⁻⁶ K⁻¹ aufweist.

2. Verfahren (2) nach Anspruch 1,
wobei das Erwärmen (12) der Form (42) das Erwärmen von der ersten Temperatur auf eine zweite Temperatur umfasst, die in einem Bereich von 70°C bis 150°C liegt.

3. Verfahren (2) nach Anspruch 1 oder 2,
ferner aufweisend das Erwärmen (22) auf eine dritte Temperatur zum Aushärten (16), die in einem Bereich von 150°C bis 220°C liegt.

4. Verfahren (2) nach einem der vorhergehenden Ansprüche,
wobei der Ausgleichskörper (32) vor dem Anordnen auf das Formwerkzeug (26) an Längskanten schmaler dimensioniert wird als an Querkanten des Formwerkzeugs (26), wenn Längskanten eine größere Erstreckung haben als Querkanten des Formwerkzeugs (26).

5. Verfahren (2) nach einem der vorhergehenden Ansprüche,
wobei der Ausgleichskörper (32) derart dimensioniert wird, dass bei der ersten Temperatur ein Spalt (46) zwischen dem Ausgleichskörper (32) und der mindestens einen Lage des Faserhalbzeugs (38) vorliegt und erst nach dem Erwärmen (12) und vor dem Einleiten (14) von Harz der Ausgleichskörper (32) zu der mindestens einen Lage des Faserhalbzeugs (38) aufschließt.

6. Werkzeugsystem (24) zum Herstellen eines Bauteils aus einem faserverstärkten Kunststoff, aufweisend:
ein Formwerkzeug (26) mit einer einen umlaufenden Rand (30) aufweisenden Werkzeugoberfläche (28),
einen Ausgleichskörper (32) mit einem thermischen Ausdehnungskoeffizienten, der größer ist als ein thermischer Ausdehnungskoeffizient des Formwerkzeugs (26),
eine Verschlusseinrichtung (34), die mit dem Formwerkzeug (26) korrespondierend geformt ist, und
eine Erwärmungseinrichtung (36) zur bedarfsweisen Erwärmung des Formwerkzeugs (26),
wobei die Werkzeugoberfläche (28) dazu ausgebildet ist, bei einer ersten Temperatur mindestens eine Lage eines Faserhalbzeugs (38) mit einer umlaufenden Kontur (40) aufzunehmen, die innerhalb des umlaufenden Randes (30) liegt, sowie des Ausgleichskörpers (32) entlang des umlaufenden Randes (30), so dass sich der Ausgleichskörper (32) von dem Rand (30) aus in Richtung der umlaufenden Kontur (40) erstreckt,
wobei die Verschlusseinrichtung (34) dazu ausgebildet ist, das Formwerkzeug (26) zu einer geschlossenen Form (42) zu verschließen und dabei die mindestens eine Lage des Faserhalbzeugs (38) und den Ausgleichskörper (32) einzuschließen,
wobei die geschlossene Form (42) mindestens eine Harzleitung zum Aufnehmen von Harz aufweist,
wobei das Formwerkzeug (26) einen thermischen Ausdehnungskoeffizienten von höchstens 30·10⁻⁶ K⁻¹ aufweist, der Ausgleichskörper (32) aus einem Kunststoff hergestellt ist und der Ausgleichskörper (32) **dadurch gekennzeichnet ist, dass** er einen thermischen Ausdehnungskoeffizienten von mindestens 100·10⁻⁶ K⁻¹ aufweist.

7. Werkzeugsystem (24) nach Anspruch 6,
wobei der Ausgleichskörper (32) elastisch ist.

8. Werkzeugsystem (24) nach Anspruch 6 oder 7,
wobei der Ausgleichskörper (32) bandartig geformt ist.

9. Werkzeugsystem (24) nach einem der Ansprüche 6 bis 8,
wobei das Formwerkzeug (26) Aluminium aufweist.

10. Werkzeugsystem (24) nach einem der Ansprüche 6 bis 9,
wobei der Ausgleichskörper (32) PTFE aufweist.

## Claims

1. Method (2) for manufacturing a component from a fiber-reinforced plastic, comprising the steps:
- providing (4) a moulding tool (26) with a tool surface (28) having a circumferential edge (30),
- positioning (6) at least one layer of a semi-finished fiber product (38) with a circumferential contour (40), which lies within the circumferential edge (30), on the tool surface (28) at a first temperature,
- arranging (8) a compensating body (32) with a coefficient of thermal expansion, which is greater than a coefficient of thermal expansion of the moulding tool (26), along the circumferential edge (30), so that the compensating body (32) extends from the edge (30) in the direction of the circumferential contour (40),
- sealing (10) the arrangement of the at least one layer and the compensating body (32) by means of a closure device (34) to form a closed mould (42),
- heating (12) the mould (42), so that the compensating body (32) expands more than the mould (42),
- introducing (14) resin into the mould (42) and
- curing (16), cooling (18) and removing (20) the component,
wherein the moulding tool (26) has a coefficient of thermal expansion of at most 30·10⁻⁶ K⁻¹, the compensating body (32) is manufactured from a plastic and the compensating body (32) is **characterized by** having a coefficient of thermal expansion of at least 100·10⁻⁶ K⁻¹.

2. Method (2) according to claim 1,
wherein the heating (12) of the mould (42) comprises the heating from the first temperature to a second temperature, that lies within a range of 70°C to 150°C.

3. Method (2) according to claim 1 or 2,
further comprising the heating (22) to a third temperature for curing (16), that lies within a range of 150°C to 220°C.

4. Method (2) according to one of the preceding claims,
wherein the compensating body (32) is dimensioned narrower at longitudinal edges than at transverse edges of the moulding tool (26) before being arranged on the moulding tool (26), if longitudinal edges have a greater extent than transverse edges of the moulding tool (26).

5. Method (2) according to one of the preceding claims,
wherein the compensating body (32) is dimensioned in such a way that a gap (46) is present between the compensating body (32) and the at least one layer of the semi-finished fiber product (38) at the first temperature and the compensating body (32) breaks open to form the at least one layer of the semi-finished fiber product (38) only after the heating (12) and before the introduction (14) of resin.

6. Tool system (24) for manufacturing a component from a fiber-reinforced plastic, comprising:
a moulding tool (26) with a tool surface (28) having a circumferential edge (30),
a compensating body (32) with a coefficient of thermal expansion, which is greater than a coefficient of thermal expansion of the moulding tool (26),
a closure device (34), which is shaped correspondingly to the moulding tool (26), and
a heating device (36) for heating the moulding tool (26) as required,
wherein the tool surface (28) is designed to receive at least one layer of a semi-finished fiber product (38) with a circumferential contour (40), which lies within the circumferential edge (30), and the compensating body (32) along the circumferential edge (30) at a first temperature, so that the compensating body (32) extends from the edge (30) in the direction of the circumferential contour (40),
wherein the closure device (34) is designed to close the moulding tool (26) into a closed mould (42), thereby enclosing the at least one layer of the semi-finished fiber product (38) and the compensating body (32),
wherein the closed mould (42) has at least one resin line for receiving resin,
wherein the moulding tool (26) has a coefficient of thermal expansion of at most 30·10⁻⁶ K⁻¹, the compensating body (32) is manufactured from a plastic and the compensating body (32) is **characterized by** having a coefficient of thermal expansion of at least 100·10-⁶ K⁻¹.

7. Tool system (24) according to claim 6,
wherein the compensating body (32) is elastic.

8. Tool system (24) according to claim 6 or 7,
wherein the compensating body (32) is shaped in a band-like manner.

9. Tool system (24) according to one of claims 6 to 8,
wherein the moulding tool (26) comprises aluminium.

10. Tool system (24) according to one of claims 6 to 9,
wherein the compensating body (32) comprises PTFE.

## Revendications

1. Procédé (2) de fabrication d'un composant en une matière plastique renforcée par des fibres, comprenant les étapes suivantes :
- mise à disposition (4) d'un outil de formage (26) avec une surface d'outil (28) présentant un bord périphérique (30),
- positionnement (6) d'au moins une couche d'un produit semi-fini fibreux (38) avec un contour périphérique (40), qui se trouve à l'intérieur du bord périphérique (30), sur la surface d'outil (28) à une première température,
- agencement (8) d'un corps de compensation (32) avec un coefficient de dilatation thermique, qui est supérieur à un coefficient de dilatation thermique de l'outil de formage (26), le long du bord périphérique (30), de sorte que le corps de compensation (32) s'étende depuis le bord (30) dans la direction du contour périphérique (40),
- étanchéification (10) de l'agencement de l'au moins une couche et du corps de compensation (32) au moyen d'un dispositif de fermeture (34) pour la formation d'un moule fermé (42),
- chauffage (12) du moule (42), de sorte que le corps de compensation (32) se dilate plus fortement que le moule (42),
- introduction (14) de résine dans le moule (42) et
- durcissement (16), refroidissement (18) et enlèvement (20) du composant,
l'outil de formage (26) présentant un coefficient de dilatation thermique d'au plus 30·10⁻⁶ K⁻¹, le corps de compensation (32) etant fabriqué en matière plastique, et le corps de compensation (32) est **caracterisé en ce qu'**il présent un coefficient de dilatation thermique d'au moins 100·10⁻⁶ K⁻¹.

2. Procédé (2) selon la revendication 1,
le chauffage (12) du moule (42) comprenant le chauffage de la première température à une deuxième température, qui se situe dans une plage de 70 °C à 150 °C.

3. Procédé (2) selon la revendication 1 ou 2,
présentant en outre le chauffage (22) à une troisième température pour le durcissement (16), qui se situe dans une plage de 150 °C à 220 °C.

4. Procédé (2) selon l'une quelconque des revendications précédentes,
le corps de compensation (32), avant l'agencement sur l'outil de formage (26), étant dimensionné au niveau de bords longitudinaux plus étroitement qu'au niveau de bords transversaux de l'outil de formage (26), lorsque des bords longitudinaux présentent une étendue supérieure à des bords transversaux de l'outil de formage (26).

5. Procédé (2) selon l'une quelconque des revendications précédentes,
le corps de compensation (32) étant dimensionné de telle sorte que, à la première température, il existe une fente (46) entre le corps de compensation (32) et l'au moins une couche du produit semi-fini fibreux (38) et que ce n'est qu'après le chauffage (12) et avant l'introduction (14) de résine que le corps de compensation (32) se rompt en l'au moins une couche du produit semi-fini fibreux (38).

6. Système d'outil (24) pour la fabrication d'un composant en une matière plastique renforcée par des fibres, présentant :
un outil de formage (26) avec une surface d'outil (28) présentant un bord périphérique (30),
un corps de compensation (32) avec un coefficient de dilatation thermique, qui est supérieur à un coefficient de dilatation thermique de l'outil de formage (26),
un dispositif de fermeture (34), qui est formé en correspondance avec l'outil de formage (26), et
un dispositif de chauffage (36) pour le chauffage en cas de besoin de l'outil de formage (26),
dans lequel la surface d'outil (28) est réalisée pour recevoir à une première température au moins une couche d'un produit semi-fini fibreux (38) avec un contour périphérique (40), qui se trouve à l'intérieur du bord périphérique (30), ainsi que du corps de compensation (32) le long du bord périphérique (30), de sorte que le corps de compensation (32) s'étende depuis le bord (30) dans la direction du contour périphérique (40),
dans lequel le dispositif de fermeture (34) est réalisé pour fermer l'outil de formage (26) en un moule fermé (42) et pour enfermer ainsi l'au moins une couche du produit semi-fini fibreux (38) et le corps de compensation (32),
le moule fermé (42) présentant au moins une conduite de résine pour la réception de résine,
l'outil de formage (26) présentant un coefficient de dilatation thermique d'au plus 30·10⁻⁶ K⁻¹, le corps de compensation (32) etant fabriqué en matière plastique, et le corps de compensation (32) est **caracterisé en ce qu'**il présent un coefficient de dilatation thermique d'au moins 100·10⁻⁶ K⁻¹.

7. Système d'outil (24) selon la revendication 6,
le corps de compensation (32) étant élastique.

8. Système d'outil (24) selon la revendication 6 ou 7,
le corps de compensation (32) étant formé en forme de bande.

9. Système d'outil (24) selon l'une quelconque des revendications 6 à 8,
l'outil de formage (26) présentant de l'aluminium.

10. Système d'outil (24) selon l'une quelconque des revendications 6 à 9,
le corps de compensation (32) présentant du PTFE.
